# EUROPEAN PATENT APPLICATION

(11) **EP 4 837 823 A1**
(43) Date of publication of application: **11.11.2026**
(21) Application number: 26176368.4
(22) Date of filing: 04.05.2026
(51) Int. Cl.: B62D 33/02, B62D 65/02, B62D 33/023

(54) **ASSEMBLING KIT FOR ASSEMBLING A LOAD BODY TO THE CHASSIS OF A VEHICLE AND METHOD FOR ASSEMBLING SUCH LOAD BODY TO THE CHASSIS OF A VEHICLE**

(30) Priority: 06.05.2025 IT 202500010125
(71) Applicant: Triolo, Erasmo, 10142 Torino (TO) (IT)
(72) Inventor: Triolo, Erasmo, 10142 Torino (TO) (IT)
(74) Representative: Robba, Pierpaolo

(57) **Abstract**

The present invention relates to an assembling kit (100) for assembling a load body (200) to the chassis of a vehicle, comprising one or more subgroups of components, each consisting of identical components, and one or more unique components, different from all the other components of the kit. Said components of the kit have one or more hole groups. The geometric configuration of at least one hole group on any component belonging to a subgroup of components finds identical match in a second hole group provided exclusively on a unique component or in another subgroup of components. The geometric configuration of at least one hole group provided on a unique component, when finding no identical match in a hole group provided in a subgroup of components, finds identical match in a second hole group provided exclusively on another unique component. In this way, the assembling kit according to the invention eliminates the risk of incorrect assembly of the components during assembly of the load body. The present invention further relates to a method of assembling said load body by means of said assembling kit.

## Description

### Technical Field of the Invention

The present invention relates to an assembling kit for assembling a load body to the chassis of a vehicle.

The present invention further relates to a method for assembling said load body to the chassis of a vehicle.

More particularly, the present invention relates to an assembling kit for assembling fixed load bodies to the chassis of a vehicle.

This invention may find application, for example, but without limitation, in the field of fittings for commercial vehicles for goods transportation.

### Background Art

As is known, some vehicles, such as lorries or trucks, are equipped with special containment containers, called 'load bodies', to enable goods to be transported by road.

Typically, the load body is a separate element from the driver's cab. Therefore, many of the vehicles on the road with a load body are not entirely produced by the manufacturers themselves but are derived from chassis (or cabs) on which other companies later install the load body assembly, i.e. all the parts that form the load body.

Among the most common types of load body assembly is the fixed load body with sideboards, ideal for road transport of palletized and loose materials.

Said fixed load body comprises a metal frame to which a rectangular floor is attached. Said rectangular floor is then closed, at the front, i.e. towards the driver's cab, with a fixed sideboard and, on the other three sides, with openable sideboards so as to allow easy loading and unloading of the materials.

Frame, floor and sideboards in turn are made up of many parts and therefore the assembly of fixed load bodies includes, as a whole, a large number of components.

In addition, in order to be fitted to vehicles of different manufacturers and to be able to meet different loading requirements, fixed load bodies can have varying dimensions and structures, while respecting the minimum and maximum roadworthiness of the vehicle.

Therefore, the assembly of load bodies also involves, in addition to a large number of components, a wide variety of different components for different vehicles and loading requirements.

As can be easily understood, the large number and variety of components lead to numerous problems when assembling the load bodies to the vehicle chassis, due not only to the need to select, from a multitude of components, those specific to that type of assembly on that type of vehicle, but also to the fact that many components, even if intended for the same assembly, often require further processing, such as bending, cutting parts, drilling holes, etc., in order to fit and fasten them to one another.

Therefore, the assembling of load bodies is a long and complex process, so much so that it requires the presence of expert assemblers to complete the structure of the load body.

In order to try to solve the above problems, some assembling kits have been developed providing all the components which are intended for the same assembly and have already undergone some preliminary machining operations.

Though allowing for a degree of simplification and a reduction in assembly time, the assembling kits currently available and in use still consist of a large number of components, many of which still require some machining operations to fasten said components to one another.

For example, some known assembling kits require cutting operations in order to adapt the components to the wheelbase of the vehicle for which the load body is intended, or welding/bending operations to join these components together.

Such machining operations require a certain level of experience and skill on the part of the assembler and, if not carried out correctly, can result in components being joined incorrectly or, in the worst cases, can cause irreparable damage to one or more components of the kit, thus compromising the entire assembly of the load body.

In addition, known assembling kits often contain components that are very similar, but which must be fitted in a specific position to ensure they are assembled correctly.

Consequently, the presence of such components can easily lead to incorrect assembly and often means that, once the component has been secured in a wrong position, it must be removed and repositioned in the correct position, thereby increasing the time taken to assemble the load body.

Finally, some of the components included in many known assembling kits require more than one assembler to handle and install them on the vehicle chassis.

The main object of the present invention is therefore to overcome the limitations described above by providing an assembling kit for assembling a load body, in particular a cargo body, that allows for simple assembly of the load body, with precise adaptation of the various components, and that at the same time eliminates the risk of errors during assembly.

A further object of the present invention is to provide an assembling kit that reduces assembly times.

A still further object of the present invention is to provide an assembling kit that does not require operations such as bending, cutting, drilling or welding of the different components during assembly, and in which the components forming the kit can be joined to one another without having to call in expert assemblers.

These and other objects are achieved with the assembling kit for assembling a load body to the chassis of a vehicle as claimed in the appended claims.

### Summary of the Invention

According to the present invention, by 'assembling kit' it is meant the set of mutually combinable components intended for assembling a load body to the chassis of a vehicle.

The assembling kit according to the present invention comprises, in a known manner, a plurality of components.

Said plurality of components is divided into one or more subgroups of components, each subgroup consisting of two or more identical components, and into one or more unique components, which differ(s) from all the other components included in said plurality of components.

According to the invention, the components forming said plurality of components comprise one or more hole groups, which allow said components to be coupled to one another by means of joining elements passing through the holes in each hole group.

Still according to the invention, each hole group is arranged according to a predetermined geometric configuration, resulting from the relative positioning of the holes that form the hole group and/or by the position of that hole group in relation to the component to which said hole group belongs.

The term 'reciprocal arrangement of holes' refers, for example, to an arrangement in which holes belonging to the same hole group are positioned in such a way as to form the vertices of a triangle, of a square, of a pentagon or any other regular or irregular geometric shape.

The term 'position of the hole group in relation to the component' refers, for example, to the position of the hole group relative to the edges of the component or relative to an axis of symmetry of the component if such component has one.

In particular:
- the geometric configuration of at least one hole group provided on any component belonging to a same subgroup of components finds identical match, in the assembling kit, not only in the components belonging to the same subgroup but also in the geometric configuration of a second hole group provided exclusively in another subgroup of components, on any component belonging to said other subgroup of components, or in the geometric configuration of a second hole group provided exclusively on a unique component;
- the geometric configuration of at least one first hole group provided on any unique component, when finding no identical match, in the assembling kit, in a hole group provided in a subgroup of components, finds identical match in the geometric configuration of a second hole group provided exclusively in another unique component of the assembling kit.

Advantageously, the fact that these components can be coupled to one another using joining elements passing through the holes eliminates the need - during the assembly of the load body - to perform any machining operations on the components, such as welding or bending, in order to fasten these components to one another, eliminating the risk of damaging them or connecting them imprecisely.

Furthermore, the assembling kit according to the invention eliminates the risk of incorrect mounting of components during assembly of the load body, even when the assembling kit consists, as is often the case, of a high number of components.

Indeed, the moment an assembler correctly places a first component against a second component with the intention of joining them together, they immediately realize that the geometric configurations of the hole groups of said components match, i.e., that each hole of the first hole group of the first component is aligned with a corresponding hole of the second hole group of the second component, thus allowing the joining elements to pass through each pair of aligned holes.

If, instead, the assembler incorrectly places a first component against a second component, the geometric configurations of the hole groups of the two components do not match, thereby preventing the joining elements from passing through.

Therefore, the assembler will immediately realize that these components cannot be fastened together by means of the two hole groups placed against each other and - if at least one of the two components has more than one hole group - will change the orientation of said components relative to each other in order to try to join them by means of another combination of hole groups. Alternatively, the assembler will replace the second component by looking, within the assembling kit, for a third component whose hole group has the same geometric configuration as the hole group provided on the first component.

Indeed, according to a further aspect of the present invention, there is provided a method for assembling a load body to the chassis of a vehicle by means of the assembling kit described above.

Said method comprises the steps of:
a) providing said one or more subgroups of components;
b) providing said one or more unique components;
c) identifying the first hole group and the second hole group whose geometric configurations find identical match;
d) placing said first hole group and said second hole group against each other in such a way that the holes of said first hole group are aligned with the holes of said second hole group;
e) inserting joining elements into each pair of aligned holes of the first hole group and the second hole group so as to fasten together the two components to which said first hole group and said second hole group belong.

Preferably, said joining elements are made in the form of screws and/or rivets and/or nails, and even more preferably they are made in the form of screws, and even more preferably they are made in the form of screws having the same thread diameter, and the components forming the assembling kit comprise hole groups whose holes have the same diameter.

According to a preferred embodiment of the present invention, the components forming said plurality of components are numbered according to the order of assembly of said components, and the components belonging to a same subgroup of components have the same number.

As an alternative to, or in combination with, the preferred embodiment described above, said plurality of components comprises at least one pair of components, meaning a pair formed by a first component and a second component that have the same geometric configuration of at least one hole group, wherein the first component of said pair of components comprises a first symbol finding identical match in a second symbol provided on the second component of said pair of components.

If said first component or said second component belongs to a subgroup of components, all the components belonging to this subgroup of components have said first or second symbol, respectively.

Preferably, said first and second symbol are located on the first and second component, respectively, so that, when said first and second components are fastened together, said first symbol and said second symbol are overlapped.

Preferably, said first symbol and said second symbol are made as shaped openings/grooves (for example, in the shape of a triangle, diamond or hexagon so as to be distinguished from the holes forming the hole groups).

Even more preferably, said first symbol and said second symbol are made as openings created by laser machining.

The presence of these numbers and/or symbols makes it even easier for the assembler to identify which parts need to be fastened together, thereby making it possible to speed up the process of assembly of the load body even further.

According to a preferred embodiment of the present invention, the components included in the assembling kit are suitable for providing a load body intended for a vehicle with a specific wheelbase.

In this way, in the assembling kit of the present invention all the components are supplied pre-designed and cut to size so that they fit together perfectly, requiring no further processing, during assembly of the load body, to adapt them to the vehicle wheelbase.

According to an even more preferred embodiment of the present invention, the assembling kit includes a marking associated with the wheelbase of the vehicle for which the assembling kit is intended.

Even more preferably, said marking corresponds to said first symbol and said second symbol provided on the first and the second component of said at least one pair of components included in the assembling kit, respectively.

According to a preferred embodiment of the present invention, the assembling kit comprises:
- two or more longitudinal beams intended to be mounted to the chassis of the vehicle, along a direction parallel to the longitudinal axis of said vehicle;
- cross beams, intended to be fixed to said two or more longitudinal beams and oriented perpendicularly with respect thereto;
- connecting elements, wherein each of said connecting elements is suitable for fixing one of said cross beams to one of said two or more longitudinal beams;
- auxiliary elements, wherein each of said auxiliary elements is intended to be fixed to one of said two or more longitudinal beams in such a way as to be aligned with the respective longitudinal beam;
- a first head profile, intended to be fixed to said two or more longitudinal beams, at a first end of said two or more longitudinal beams, and oriented perpendicularly thereto;
- a second head profile, intended to be fixed to said one or more longitudinal beams, at a second end, opposite said first end, of said two or more longitudinal beams, and oriented perpendicularly thereto.

Preferably, each of said two or more longitudinal beams is a unique component of the assembling kit.

Preferably, said cross beams are all identical to one another, forming a subgroup of components of the assembling kit.

Preferably, said auxiliary elements are all identical to one another, forming a single subgroup of components of the assembling kit.

Alternatively, the auxiliary elements may be divided into several subgroups of components: only the auxiliary elements intended to be fixed to a same longitudinal beam are identical to one another and form a subgroup of components of the assembling kit.

Preferably, the connecting elements are divided into several subgroups of components: only those connecting elements that connect the cross beams to a same longitudinal beam are identical to one another and form a subgroup of components of the assembling kit.

Preferably, each of said connecting elements comprises:
- at least one first connecting portion, intended to cooperate with one of said two or more longitudinal beams as well as with one of said auxiliary elements to connect said connecting element to said longitudinal beam and said auxiliary element;
- at least one second connecting portion, intended to cooperate with one of said cross beams to connect said connecting element to said cross beam.

More preferably, at least one of the first and second connecting portions of each connecting element has a hole group whose geometric configuration finds identical match exclusively in a second hole group provided on one of said two or more longitudinal beams or on any of the cross beams, respectively.

According to a preferred embodiment of the present invention, said assembling kit comprises two or more first supports, each of said first supports being intended to fix together one of said two or more longitudinal beams, the first head profile and one of said auxiliary elements.

To this aim, each of said first supports comprises:
- at least one first fixing portion, intended to cooperate with the first end of one of said two or more longitudinal beams to fix said first support to said longitudinal beam;
- at least one second fixing portion, intended to cooperate with the first head profile to fix said first head profile to the said first support;
- at least one third fixing portion, intended to cooperate with one of said auxiliary elements to fix said auxiliary element to said first support.

Preferably, each of said first supports further comprises a supplementary fixing portion intended to fix one of said two or more longitudinal beams to the chassis of the vehicle.

In this preferred embodiment, each of said first supports therefore allows four elements to be fixed together: one of said two or more longitudinal beams, the first head profile, one of said auxiliary elements and the chassis of the vehicle.

Preferably, at least one of said first, second and third fixing portions of each of said two or more first supports comprises at least one hole group finding identical match exclusively in a second hole group provided on one of said one or more longitudinal beams, on said first head profile or on said auxiliary elements respectively.

According to a further preferred embodiment of the present invention, said assembling kit comprises two or more second supports, each of said second supports being intended to fix together one of said two or more longitudinal beams, the second head profile and one of said auxiliary elements.

To this aim, each of said second supports comprises:
- at least one fourth fixing portion, intended to cooperate with the second end of one of said two or more longitudinal beams to fix said second support to said longitudinal beam;
- at least one fifth fixing portion, intended to cooperate with the second head profile to fix said second head profile to said second support;
- at least one sixth fixing portion, intended to cooperate with one of said auxiliary elements to fix said auxiliary element to said second support.

Preferably, at least one of said fourth, fifth and sixth fixing portions comprises a hole group finding identical math exclusively in the geometric configuration of a second hole group provided on one of said one or more longitudinal beams, on said second head profile or on said auxiliary elements, respectively.

According to a further aspect of the present invention, said assembling kit further comprises two lateral profiles intended to be positioned perpendicularly to the first and second head profile and to be coupled to said head profiles in order to form together therewith a perimeter frame.

The assembling kit further comprises four corner blocks, wherein each of said corner blocks is intended to fix one end of each of said first and second head profiles to one end of each of the two lateral profiles.

Preferably, said assembling kit further comprises two pillars: a first pillar that is intended to be connected to one of the four corner blocks that fixes the first head profile (or the second head profile) to one of the lateral profiles, a second pillar that is intended to be connected to one of the four corner blocks that fixes the first head profile (or the second head profile) to the other lateral profile.

Said two pillars are perpendicular to the plane defined by the perimeter frame and are intended to support at least one bar arranged perpendicularly between them.

For this purpose, each of said pillars comprises at least one fixing portion suitable for connecting an end of said at least one bar to said pillar.

Said fixing portion comprises one or more grooves/slots and a tab, arranged near said one or more grooves/slots and intended to act as a support for said at least one bar.

Preferably, said tab extends perpendicularly to the plane on which said one or more grooves/slots lie.

According to a further aspect of the present invention, each of said two or more cross beams comprises an electrical feed-through designed to allow power cables to pass through.

### Brief Description of Drawings

Further advantages and features of the present invention will become apparent from the ensuing detailed description of a preferred embodiment of the invention, given by way of non-limiting example, with reference to the accompanying drawings, in which:
- Figure 1 shows an exploded view of the set of components forming the assembling kit according to the invention;
- Figure 2 shows a first perspective view from below of a fixed load body made with the assembling kit of Figure 1;
- Figure 3 shows a second perspective view from below of the fixed load body of Figure 2;
- Figure 4 shows one of the first supports included in the assembling kit of Figure 1;
- Figure 5 shows one of the second supports included in the assembling kit of Figure 1;
- Figure 6 shows one of the cross beams included in the assembling kit of Figure 1;
- Figure 7 shows two pillars included in the assembling kit of Figure 1.

### Detailed Description of a Preferred embodimento of the Invention

In the following description of a preferred embodiment of an assembling kit for assembling a load body, reference will be made to an assembling kit for assembling a fixed load body to the chassis of a commercial vehicle.

However, said embodiment should not be interpreted in a restrictive sense, and the assembling kit according to the invention could be used for making other types of load bodies and/or for load bodies intended for other types of vehicles.

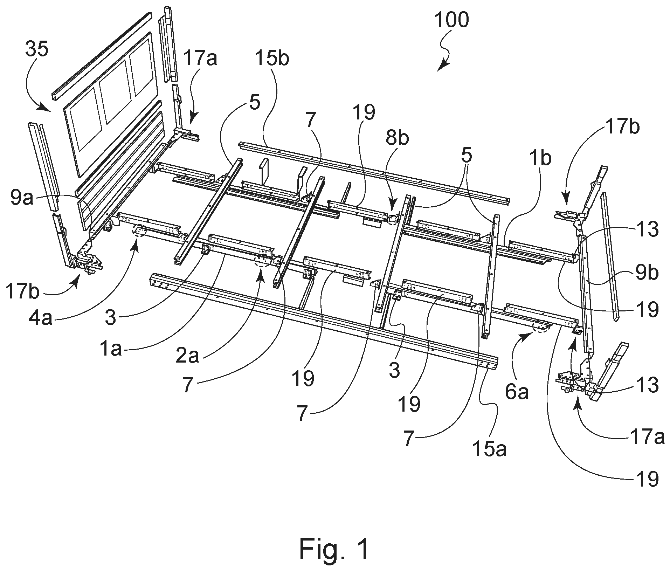

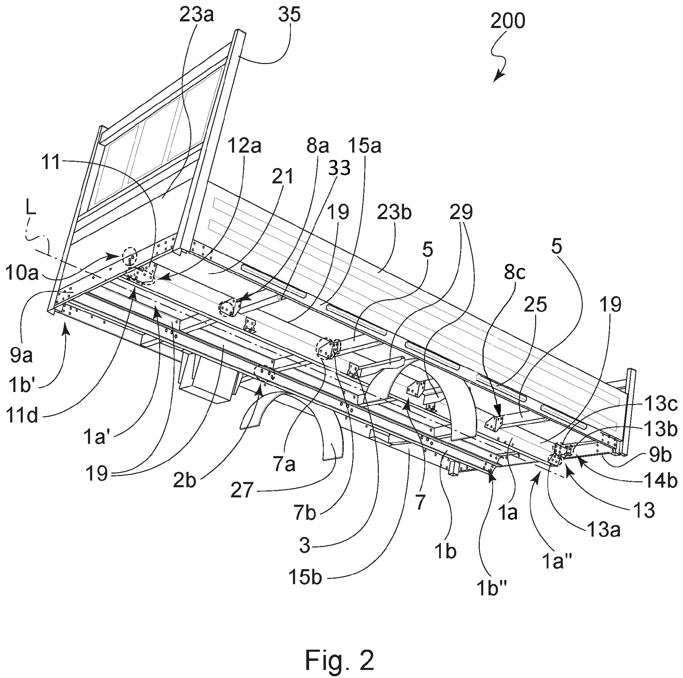

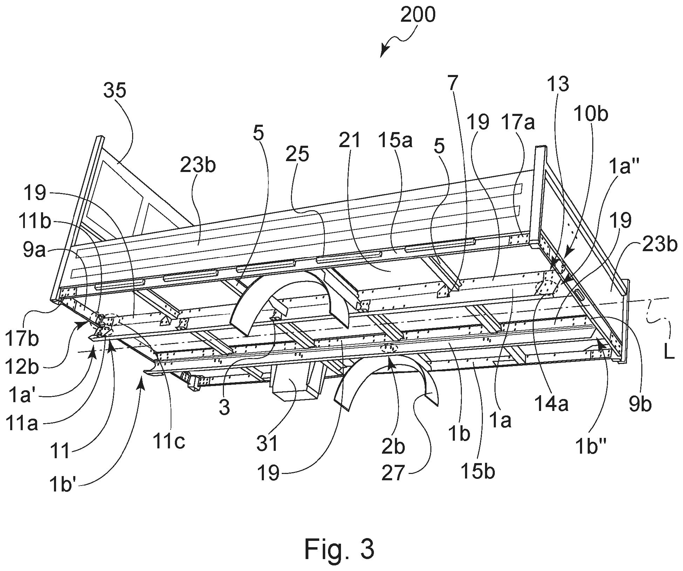

Figure 1 shows the set of the mutually combinable components forming the assembling kit 100 and intended to assemble a fixed load body 200, which is shown in its assembled and ready-for-use condition in Figures 2 and 3.

When describing said load body 200, the term "front" refers to a portion of the load body 200 that is near the driver's cab of the vehicle, whereas the term "rear" refers to a portion of the load body 200 that is far from said driver's cab.

The "front end" of the load body 200 is shown on the left side of Figures 2 and 3, whereas the "rear end" of the load body 200 is shown on the right side of Figures 2 and 3.

Referring again to Figures 2 and 3, said load body 200 extends along a longitudinal axis L, the direction of which runs between said front end and said second end.

As can be seen in Figures 1 - 3, said assembling kit 100 comprises, in a known manner, a first longitudinal beam 1a and a second longitudinal beam 1b, which are intended to be mounted to the chassis of the vehicle, along a direction parallel to the longitudinal axis of said vehicle (corresponding to the longitudinal axis L of the load body 200) and are distanced from each other and arranged symmetrically on the two opposite sides relative said longitudinal axis L.

As is known, the assembling kit 100 might also comprise more than two longitudinal beams.

Each of said longitudinal beams 1a and 1b has, respectively, a first end 1a', 1b', intended to be placed at the front end of the load body 200, and a second end 1a'', 1b'', intended to be placed at the rear end of the load body 200.

In a known manner, said assembling kit 100 comprises brackets 3 suitable for fixing said two beams 1a and 1b to the chassis of said vehicle.

Said brackets 3 are made, in the illustrated embodiment, as a sheet of metal bent into an 'L' shape and are all identical to one another so that they can be used indifferently to fix any of said two longitudinal beams 1a and 1b to the chassis of the vehicle.

As can be seen in Figures 1 and 2, said assembling kit 100 comprises, in a known manner, cross beams 5, intended to be fixed to both vertical beams 1a and 1b and oriented perpendicular to said vertical beams so as to form a ladder-like frame.

Said cross beams 5 are all identical to one another so that they can be fixed indifferently to said longitudinal beams.

In this regard, said assembling kit 100 comprises connecting elements 7, each of said connecting elements 7 being suitable for fixing said cross beams 5 to said longitudinal beams 1a and 1b, as will be described in more detail below.

In the illustrated embodiment, the connecting elements 7 that enable fixing to the first longitudinal beam 1a are all identical to one another so that they can be used indifferently to fix said cross beams 5 to said first longitudinal beam 1a.

Similarly, the connecting elements 7 that enable fixing to the second longitudinal beam 1b are all identical to one another so that they can be used indifferently to fix said cross beams 5 to said second longitudinal beam 1b.

Alternatively, all the connecting elements 7 could be identical to one another.

Said assembling kit 100 further comprises two head profiles, consisting of:
- a first head profile 9a, intended to be fixed to said longitudinal beams 1a e 1b, near the first end 1a', 1b' of said two or more longitudinal beams 1a and 1b, and oriented perpendicularly with respect to said two longitudinal beams 1a and 1b;
- a second head profile 9b, intended to be fixed to said longitudinal beams 1a and 1b, near said second end 1a", 1b" of said two longitudinal beams 1a and 1b, and oriented perpendicularly with respect to said two longitudinal beams 1a and 1b.

In this regard, said assembling kit 100 further comprises:
- two first supports 11, intended to fix said first head profile 9a to the first end 1a' of the first longitudinal beam 1a and to the first end 1b' of the second longitudinal beam 1b, respectively; and
- two second supports 13, intended to fix said second head profile 9a to the second end 1a" of the first longitudinal beam 1a and to the second end 1b" of the second longitudinal beam 1b, respectively.

It is clear that, in the event that the assembling kit comprises more than two longitudinal beams, it could also include a greater number of first and second supports.

According to the illustrated embodiment, the longitudinal beams 1a and 1b, the cross beams 5 and the two head profiles 9a and 9b are made in the form of a sheet of metal bent in such a way that each of said components has a cross-section that is broadly 'C'-shaped. It is , however, clear that, in an alternative embodiment, such components could be made from a sheet of metal bent in a different manner.

Said assembling kit 100 further comprises two lateral profiles, consisting of:
- a first lateral profile 15a, which is intended to be fixed to said cross beams 5, at a first end of said cross beams 5, and is oriented perpendicular to them, i.e., parallel to the longitudinal axis L;
- a second lateral profile 15b, which is intended to be fixed to said cross beams 5, at a second end, opposite said first end, of said cross beams 5, and oriented perpendicular to them, i.e., parallel to the longitudinal axis L.

In this regard, said two lateral profiles 15a and 15b as well are made in the form of a sheet of metal bent in such a way that each of said profiles has a cross-section that is broadly 'C'-shaped, wherein the open portion of said 'C' is intended to face said longitudinal axis L.

In particular, the cross-section of said lateral profile 15a and of said second lateral profile 15b forms a seat into which said first ends of said cross beams 5 and said second ends of said cross beams 5 can be inserted, respectively, during assembly of the load body 200.

In addition, said two lateral profiles 15a and 15b are intended to be coupled to said two head profiles 9a and 9b to form a perimeter frame around the ladder-like frame.

In this regard, the assembling kit 100 comprises four corner blocks, wherein each of said corner blocks is intended to fix an end of each of the two head profiles 9a and 9b to an end of each of the two lateral profiles 15a and 15b.

In particular, in the embodiment shown in Figures 1 - 3, said four corner blocks are identical in pairs, defining a first pair of corner blocks 17a and a second pair of corner blocks 17b: the two corner blocks belonging to the same pair are intended to connect those ends of said two head profiles 9a and 9b and of said two lateral profiles 15a and 15b that are intended to be located on the diagonal of said perimeter frame.

In an alternative embodiment, the four corner blocks could all be identical to one another, and be used indifferently to connect the ends of said two head profiles 9a and 9b to the ends of said two lateral profiles 15a and 15b.

The assembling kit 100 further comprises auxiliary elements 19, intended to be fixed to the longitudinal beams 1a and 1b, so as to be aligned with said longitudinal beams 1a and 1b and perpendicular to said cross beams 5. In the illustrated embodiment, said auxiliary elements 19 all have the same length and the auxiliary elements 19 intended to be aligned with the first longitudinal beam 1a are all identical to one another, so that they can mounted indifferently to said first longitudinal beam.

Similarly, the auxiliary elements 19 intended to be aligned with the second longitudinal beam 1b are all identical to one another, so that they can mounted indifferently to said second longitudinal beam.

As shown in Figures 2 and 3, the auxiliary elements 19 intended to be interposed between two adjacent cross beams 5 are fixed to one of said two cross beams and to the first or second longitudinal beam 1a and 1b by means of the connecting elements 7.

Instead, the auxiliary elements 19 interposed between the first head profile 9a and the cross beam 5 closest to said first head profile (hereinafter referred to as 'first cross beam') are intended to be fixed to said first cross beam and to the first or second longitudinal beam 1a, 1b by means of said connecting elements 7 and/or are intended to be fixed to said first head profile 9a and to the first or second longitudinal beam 1a, 1b by means of said first supports 11.

Finally, the auxiliary elements 19 interposed between the second head profile 9b and the cross beam 5 closest to said second head profile (hereinafter referred to as 'last cross beam') are intended to be fixed to said last cross beam and to the first or second longitudinal beam 1a, 1b by means of said connecting elements 7 and/or are intended to be fixed to said second head profile 9b and to the first or second longitudinal beam 1a, 1b by means of said second supports 13.

In this way, the auxiliary elements 19 define the wheelbase between the cross beams 5 as well as the distance between the first head profile 9a and the first cross beam, and the distance between the second head profile 9b and the last cross beam, thereby allowing for increased accuracy of assembly of the load body 200 compared to the known types of assembling kits and for reduction of the time required for assembling said kit.

Furthermore, once assembly of the assembling kit 100 is completed, the set of said auxiliary elements 19 provides, together with the cross beams 5, a support grid. Said support grid makes it possible to effectively support the panels 21 that form the floor of the load body 200.

Said panels 21 may be provided in the assembling kit 100.

In addition, said auxiliary elements 19 provide rigidity to the ladder-like frame, allowing to reduce bending and torsion of the load body 200, once assembled and mounted to the vehicle, both during acceleration and braking of the vehicle.

In the illustrated embodiment, each of said auxiliary elements 19 is made in the form of a sheet of metal bent in such a way as to obtain a substantially 'C'-shaped cross-section.

The portion of sheet of metal that is located at one end of said 'C' and intended to face, following assembly of the load body 200, the panels 21 forms a support base for said panels.

During assembly, the open portion of said 'C' preferably faces the longitudinal axis L of the load body 200.

It is clear that, in an alternative embodiment, said auxiliary element might be obtained by means of a sheet of metal bent in a different manner or by means of other elements such as bars or beams.

Going into more detail, each of said connecting elements 7 comprises:
- at least one first connecting portion 7a, intended to cooperate with one of said two longitudinal beams 1a, 1b and with one of said auxiliary elements 19 to connect said connecting element 7 to said longitudinal beam 1a, 1b and to said auxiliary element 19;
- at least one second connecting portion 7b, intended to cooperate with one of said cross beams 5 to connect said connecting element 7 to said cross beam 5.

Therefore, by means of said first and second connecting portions, each connecting element 7 allows joining together a cross beam 5, one of said longitudinal beams 1a, 1b and an auxiliary element 19.

In the illustrated embodiment, said connecting element 7 is made in the form of a sheet of metal bent in such a way as to obtain a first side and a second side of the sheet of metal that are substantially perpendicular to each other: on the first side there is provided the first connecting portion 7a and on the second side there is provided the second connecting portion 7b.

It is clear that, in alternative embodiments, said connecting element 7 might be made by means of a sheet of metal having a different shape or in any other way such as to allow joining together the auxiliary element 19, the cross beam 5 and the longitudinal beam 1a, 1b.

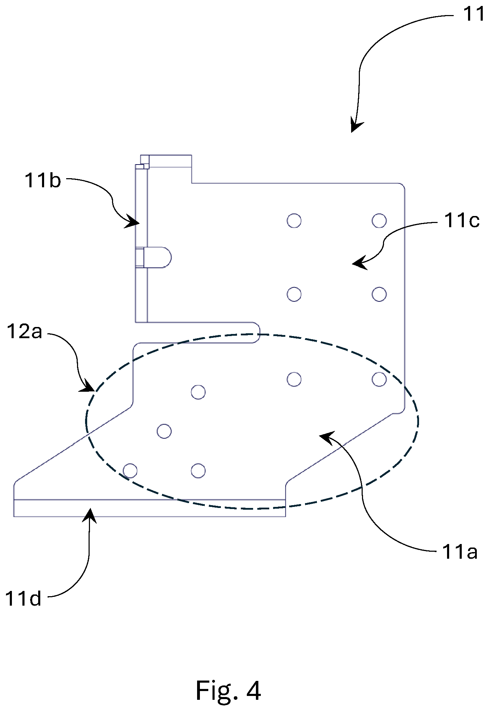

As can be seen in Figures 3 and 4, the first support 11 intended to be associated with the first longitudinal beam 1a comprises:
- at least one first fixing portion 11a, intended to cooperate with the first end 1a' of the first longitudinal beam 1a to fix said first support 11 to said first longitudinal beam 1a;
- at least one second fixing portion 11b, intended to cooperate with the first head profile 9a to fix said first head profile 9a to said first support 11;
- at least one third fixing portion 11c, intended to cooperate with the auxiliary element 19 located between the first head profile 9a and the first cross beam to fix said auxiliary element 19 to said first support 11.

Similarly, the first support (not shown) intended to be associated with the second longitudinal beam 1b comprises at least one first fixing portion, intended to cooperate with the first end 1b' of the second longitudinal beam 1b to fix said first support to said second longitudinal beam 1b, and at least one second and one third fixing portion the functions of which correspond to those described in connection with the second and third fixing portion 11b, 11c of the first support 11 intended to be associated with the first longitudinal beam 1a.

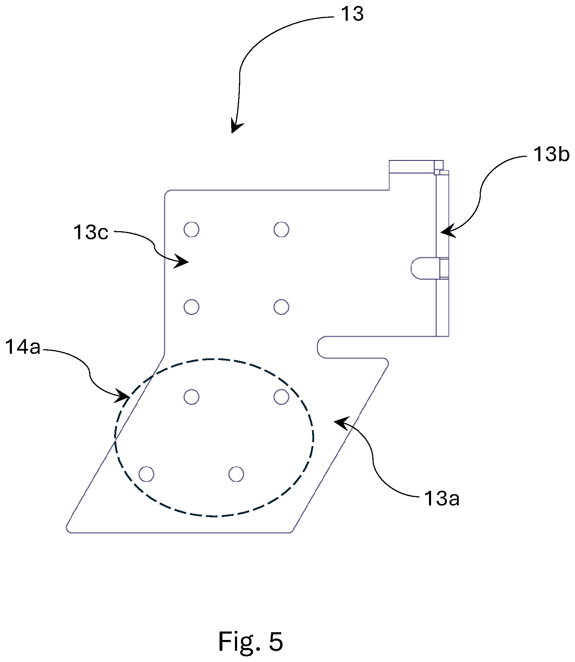

As can be seen in Figures 2 and 5, the second support 13 intended to be associated with the first longitudinal beam 1a comprises:
- at least one fourth fixing portion 13a, intended to cooperate with the second end 1a" of the first longitudinal beam 1a to fix said second support 13 to said first longitudinal beam 1a;
- at least one fifth fixing portion 13b, intended to cooperate with the second head profile 9b to fix said second head profile 9b to said second support 13;
- at least one sixth fixing portion 13c, intended to cooperate with the auxiliary element 19 located between the second head profile 9b and the last cross beam to fix said auxiliary element 19 to said second support 13.

Similarly, the second support (not shown) intended to be associated with the second longitudinal beam 1b comprises at least one fourth fixing portion, intended to cooperate with the first end 1b' of the second longitudinal beam 1b to fix said second support to said second longitudinal beam 1b, and at least one fifth and one sixth fixing portion the functions of which correspond to those described in connection with the fifth and sixth fixing portion 13b, 13c of the second support 13 intended to be associated with the first longitudinal beam 1a.

The first support 11 intended to be associated with the first longitudinal beam 1a further comprises a supplementary fixing portion 11d intended to fix said first longitudinal beam 1a to the chassis of the vehicle, therefore also performing the function of the brackets 3.

Similarly, the first support (not shown) intended to be associated with the second longitudinal beam 1b comprises a supplementary fixing portion intended to fix said second longitudinal beam 1b to the chassis of the vehicle.

It is evident, however, in alternative embodiments, said first supports may not include said supplementary fixing portion. Also, said first supports might be made in any way such as to allow fixing the first head profile and the auxiliary element to the first end of the longitudinal beams 1a, 1b, and said second supports might be made in any way such as to allow fixing the second head profile and the auxiliary element to the second end of the longitudinal beams 1a, 1b.

As can be seen in Figures 1 - 3, all the components described above and forming part of the assembling kit 100 - including the panels 21 when provided in the kit - are mutually associatable by means of holes provided on each of said components.

This allows coupling said components to one another by means of screws passing through said holes, without the need to perform further machining operations on the components, such as cutting, bending, welding or further drilling during assembly of the load body 200. As an alternative to, or in combination with, the screws, it would be possible to use rivets and/or nails passing through said holes.

Preferably, all the components described above comprise holes having the same diameter, more preferably, holes suitable for accommodating M8 screws.

Still according to the invention, each component comprises one or more hole groups, said one or more hole groups consisting of two or more of the holes described above.

Each hole group is arranged according to a predetermined geometric configuration, resulting from the distribution of said holes on the component and/or by the arrangement of the hole group relative to the component itself.

In particular, in the assembling kit 100 described above, the following groups of components:
- brackets 3;
- cross beams 5;
- connecting elements 7 suitable for fixing the cross beams 5 to the first longitudinal beam 1a;
- connecting elements 7 suitable for fixing the cross beams 5 to the second longitudinal beam 1b;
- auxiliary elements 19 intended to be fixed to the first longitudinal beam 1a;
- auxiliary elements 19 intended to be fixed to the second longitudinal beam 1b; constitute subgroups of the assembling kit 100.

Preferably, the first pair of corner blocks 17a and the second pair of corner blocks 17b also constitute two subgroups of the assembling kit 100.

Each subgroup is formed by components that are all identical to one another and the hole groups of a component belonging to one of said subgroups are identical to the hole groups of all the other components belonging to the same subgroup.

All the other components included in the assembling kit 100 are, instead, unique components, different from any other component included in the assembling kit 100.

According to the invention:
- the geometric configuration of at least one first hole group provided on any component belonging to a same subgroup of components finds identical match not only in the components belonging to the same subgroup but also in the geometric configuration of a second hole group provided exclusively in another subgroup of components, on any component belonging to said other subgroup of components, or in the geometric configuration of a second hole group provided exclusively on a unique component;
- the geometric configuration of at least one first hole group provided on any unique component, when finding no identical match, within the assembling kit, in a hole group provided in a subgroup of components, finds identical match in the geometric configuration of a second hole group provided exclusively in another unique component.

For example, the first connecting portion 7a of each connecting element 7 intended to be fixed to the first longitudinal beam 1a has a first hole group 8a the geometric configuration of which finds identical match exclusively in a second hole group 2a provided on the first longitudinal beam 1a.

Similarly, the first connecting portion 7a of each connecting element 7 intended to be fixed to the second longitudinal beam 1b has a third hole group 8b the geometric configuration of which finds identical match exclusively in a fourth hole group 2b provided on the second longitudinal beam 1b.

In this way, during assembly of the load body 200, a connecting element 7 intended for the first longitudinal beam 1a cannot be mounted by the assembler to the second longitudinal beam 1b, and vice versa, because the geometric configuration of the first hole group 8a of the connecting element 7 intended to be fixed to the first longitudinal beam 1a does not match any hole group provided on the second longitudinal beam 1b.

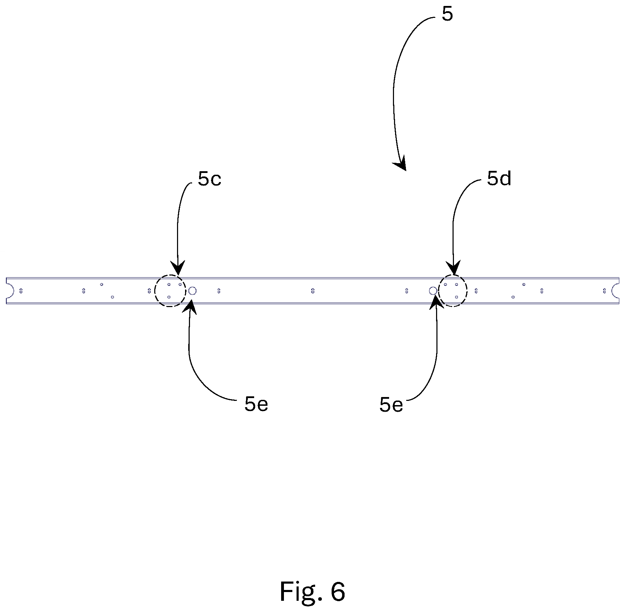

Preferably, the second connecting portion 7b of each connecting element 7 intended to be fixed to the first longitudinal beam 1a has a further hole group 8c (visible in Figure 2) the geometric configuration of which finds identical match exclusively in a hole group 5c provided on any of the cross beams 5 (visible in Figure 6).

Similarly, the second connecting portion 7b of each connecting element 7 intended to be fixed to the second longitudinal beam 1b has a further hole group (not shown) the geometric configuration of which finds identical match exclusively in a second hole group 5d provided on any of the cross beams 5. In addition, as visible in Figures 3 and 4, the first and second fixing portion 11a and 11b of the first support 11 intended to be fixed to the first longitudinal beam 1a have a fifth and a sixth hole group 12a and 12 b, respectively.

The geometric configuration of the fifth hole group 12a finds identical match exclusively in the holes of a seventh hole group 4a provided on the first longitudinal beam 1a, and the geometric configuration of the sixth hole group 12b finds identical match exclusively in the holes of an eighth hole group 10a provided on the first head profile 9a.

Similarly, as can be seen in Figures 2 and 5, the fourth and fifth fixing portion 13a, 13b of the second support 13 intended to be fixed to the first longitudinal beam 1a have a ninth and a tenth hole group 14a, 14b, respectively.

The geometric configuration of the ninth hole group 14a finds identical match exclusively in an eleventh hole group 6a provided on said first longitudinal beam 1a, and the geometric configuration of the tenth hole group 14b finds identical match exclusively in a twelfth hole group 10b provided on said second head profile 9b.

Similarly, the first and second fixing portion of the first support intended to be fixed to the second longitudinal beam 1b comprise hole groups, wherein each of said hole groups has a geometric configuration that finds identical match exclusively in a hole group provided on the second longitudinal beam 1b and on the first head profile 9a, respectively.

Furthermore, the fourth and fifth fixing portion of the second support intended to be fixed to the second longitudinal beam 1b comprise hole groups, wherein each of said hole groups has a geometric configuration that finds identical match exclusively in a hole group provided on the second longitudinal beam 1b and on the second head profile 9b, respectively.

In this way, the assembler cannot place and fix said two first supports 11 and second supports 13 in an incorrect manner.

Therefore, thanks to the univocal geometric configuration of at least one of the hole groups provided in each component of the assembling kit, the risk of components being fitted incorrectly during the assembly of the load body 200 is prevented.

Indeed, when the assembler places a first component against a second component of the kit with the intention to fix them together, if the geometric configurations of the hole groups on such components do not match, the assembly of such components is impossible, because the holes of the two hole groups are misaligned and passage of the screws through said holes is prevented.

Accordingly, the assembling kit according to the invention makes the assembly of the load body simple, quick and easy compared with the known assembling kits, so that it can be carried out - after a brief training session or by following simple instructions - even by untrained staff.

In the illustrated embodiment, the components forming the assembling kit 100, except for the floor, are components made of sheet of metal, preferably press-formed sheet of metal, with a thickness of less than 5.0 mm, and more preferably with a thickness between 1.5 mm and 2.0 mm.

Advantageously, this makes it possible to obtain an assembling kit the components of which have a weight such that they can be handled, and therefore associated with one another, by a single person.

Given the reduced thickness of the sheet of metal, in order to ensure a secure connection between the various components, said assembling kit m100 may also include reinforcement plates.

The components forming the assembling kit according to the present invention, except for the floor, are made of stainless steel, preferably of steel coated with a zinc-aluminum-magnesium alloy and commercially known as Magnelis^{®}.

Alternatively, the components forming the assembling kit according to the present invention, except for the floor, are made of aluminum.

In addition, at the ends of the sheet of metal that forms at least the auxiliary elements 19 there are provided, at the region where said sheet of metal has been bent, relief cuts that allow removing the protruding ridges caused by the process of bending the sheet of metal. Preferably, the ends of all the components of the assembling kit 100 have, at the region where the sheet of metal forming said components has been bent, said relief cuts, which can be obtained, for example, by laser cutting.

As the coating made of Magnelis^{®} eliminates the need to apply a coat of paint on the components, and as the provision of said relief cuts allows the components of the assembling kit to be placed close to one another, it is possible to ensure very low fit tolerances between the components of the kit and, consequently, an extremely high level of assembly precision.

Accordingly, during assembly of the load body 200, it is not necessary to use templates nor to perform measurements to determine the diagonal of the frame.

It is evident, however, that in less performant embodiments, the elements that form the assembling kit of the present invention may be made with different material and may not have the relief cuts described above.

Preferably, as shown in Figures 2 and 3, the assembling kit 100 further comprises a fixed sideboard 23a, intended to be rigidly fixed to the said first head profile 9a, and three openable sideboards 23b, intended to be rotatably connected to said second head profile 9b and said two lateral profiles 15a and 15b.

In that case, said fixed sideboard 23a and said openable sideboards 23b are inserted in said assembling kit 100 preferably in a disassembled state so as not to result in a significant increase in the size of the kit.

Preferably, the assembling kit 100 further comprises accessory elements, such as, for example:
- bumper guards 25;
- mud guards 27;
- fixing plates 29 intended to fix each of said mud guards 27 to the ladder-like frame;
- at least one tool drawer 31;
- rope tensioning hooks 33, intended to be mounted at said first end and/or said second end of the cross beams 5;
- a cab guard 35.

The assembling kit 100 may also comprise other accessory elements such as tie-down rings or hooks, lightweight or reinforced pole-mounts and/or clearance lights.

Referring to Figure 6, according to a further aspect of the present invention, each of said cross beams 5 comprises an electrical feed-through 5e designed to allow power cables (for example, the cables for feeding the load body lights 200) to pass through.

Preferably, each electrical feed-through 5e is positioned on the respective cross beam 5 so that, once said cross beams 5 are fixed to the longitudinal beams 1a, 1b, the electrical feed-throughs 5e are aligned with one another.

This allows, advantageously, avoiding the need to route the power cables alternately over and under the cross beams 5 following a zigzag path.

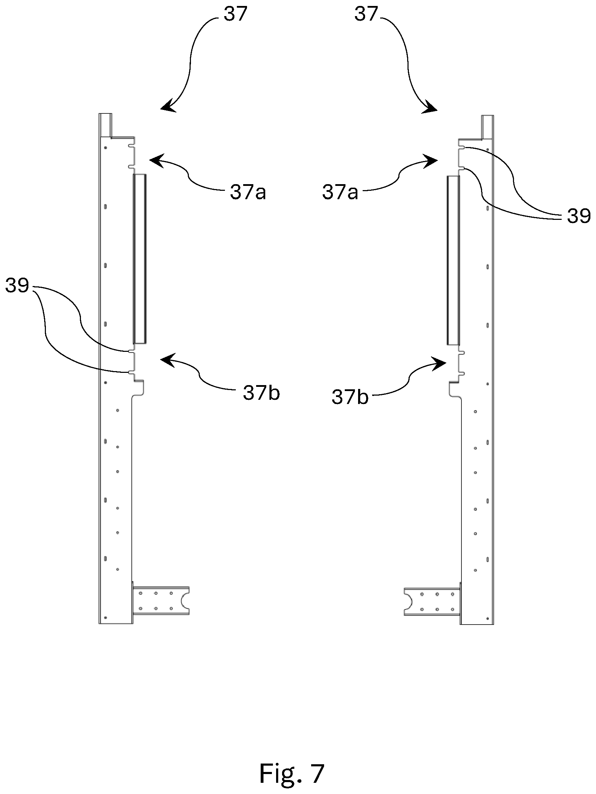

According to a further aspect of the present invention, said assembling kit 100 comprises two pillars 37, shown in Figure 7: a first pillar that is intended to be connected to one of the four corner blocks that fixes the first head profile 9a to one of the lateral profiles 15a, 15b, a second pillar that is intended to be connected to one of the four corner blocks that fixes the first head profile 9a to the other lateral profile 15a, 15b.

Said two pillars 37 are perpendicular to the plane defined by the perimeter frame and are intended to support two bars (not shown), arranged perpendicularly between them in order to form the cab guard 35 of the load body 200.

To this aim, each of said two pillars 37 comprises two fixing portions 37a and 37b suitable for connecting an end of each bar to the respective pillar.

Each fixing portion 37a, 37b comprises two grooves 39, made so as to face each other once the two pillars are connected to the respective corner blocks.

The fixing portion of each pillar 37 further comprises a tab (not shown) extending perpendicularly to the plane in which said two grooves 39 lie.

Each tab of the first pillar is intended to cooperate with the respective tab of the second pillar in order to act as a support for one of said bars.

The tab and the two grooves 39 that belong to a same fixing portion 37a, 37b are positioned so that, once a bar has been placed on each pair of tabs, said two grooves 39 are aligned with corresponding holes provided on the respective bar so as to allow fixing elements (for example, screws) to pass therethrough to fix said bar to said pillars 37.

In this way, each bar can be fixed to the pillars 37 by a single person, who at first places the bar onto the pair of tabs of the pillars and then fixes the bar to the pillars by introducing the fixing elements into the holes provided on the bar and into the grooves of the pillars, said holes and grooves being aligned.

It will be apparent to the person skilled in the art that the embodiment described in detail above should by no means be intended in a limiting sense, and that numerous modifications and variants are possible without thereby departing from the scope of protection as defined by the appended claims.

In particular, in order to make it even easier to identify the components that can be fixed together, the components of the assembling kit may be numbered according to the order of assembly of said components. In that case, the components belonging to a same subgroup of components would have the same number.

Either as an alternative or in combination, at least one pair of components, meaning a pair formed by a first component and a second component having the same geometric configuration of at least one hole group, may include a first component comprising a first symbol that finds identical match in a second symbol provided on the second component of said pair of components.

In that case, if said first component or said second component belonged to a subgroup of components, all the components of said subgroup of components would have said first symbol or said second symbol, respectively.

## Claims

1. Assembling kit (100) for assembling a load body to the chassis of a vehicle, comprising a plurality of components,
wherein said plurality of components is divided into one or more subgroups of components, each subgroup of components being composed of two or more identical components, and into one or more unique components, different from all other components of said plurality of components,
**characterized in that** the components forming said plurality of components comprise one or more hole groups (2a, 2b, 4a, 8a, 8b, 10a, 12a, 12b) suitable to couple said components to one another by means of joining elements passing through the holes of each hole group, each of said hole groups being arranged according to a predetermined geometric configuration resulting from the geometric arrangement of the holes constituting said hole groups and/or the position of said hole groups relative to the component itself,
**and in that:**
- the geometric configuration of at least one first hole group provided on any component belonging to a same subgroup of components finds identical match, in the assembling kit (100), not only in the components belonging to the same subgroup of components but also in the geometric configuration of a second hole group provided exclusively in another subgroup of components, on any component belonging to said other subgroup of components, or in the geometric configuration of a second hole group provided exclusively on a unique component;
- the geometric configuration of at least one first hole group provided on any unique component, when finding no identical match, in said assembling kit (100), in a hole group provided in a subgroup of components, finds identical match in the geometric configuration of a second hole group provided exclusively on another unique component of the assembling kit.

2. Assembling kit (100) according to claim 1, comprising at least one pair of components, intended as a pair composed of a first component and a second component which have the same geometric configuration of the holes of the hole group, wherein the first component of said pair of components further comprises a first symbol that finds identical match in a second symbol provided on the second component of said pair of components, and wherein, if said first component or said second component belongs to a subgroup of components, all the components belonging to said subgroup of components have said first symbol or said second symbol, respectively.

3. Assembling kit (100) according to claim 2, wherein said first symbol and said second symbol are made as an opening and are located on the first component and the second component, respectively, in such a way that, when said first and second component are fixed together, said first symbol and said second symbol are overlapped.

4. Assembling kit (100) according to any of the preceding claims, wherein said assembling kit (100) comprises:
- two or more longitudinal beams (1a, 1b) intended to be mounted to the chassis of the vehicle, along a direction parallel to the longitudinal axis (L) of said vehicle;
- two or more cross beams (5), intended to be fixed to said two or more longitudinal beams (1a, 1b) and oriented perpendicularly with respect thereto;
- connecting elements (7), wherein each of said connecting elements (7) is suitable for fixing said two or more cross beams (5) to said two or more longitudinal beams (1a, 1b);
- auxiliary elements (19), wherein each of said auxiliary elements (19) is intended to be fixed to one of said two or more longitudinal beams (1a, 1b) in such a way as to be aligned with the respective longitudinal beam;
- a first head profile (9a), intended to be fixed to said two or more longitudinal beams (1a, 1b), at a first end (1a', 1b') of said two or more longitudinal beams (1a, 1b) and oriented perpendicularly with respect thereto;
- a second head profile (9a), intended to be fixed to said two or more longitudinal beams (1a, 1b), at a second end (1a", 1b"), opposite said first end, of said two or more longitudinal beams (1a, 1b) and oriented perpendicularly with respect thereto.

5. Assembling kit (100) according to claim 4, wherein:
- each of said two or more longitudinal beams (1a, 1b) is a unique component of the assembling kit;
- said two or more cross beams (5) are all identical to one another, forming a subgroup of components of the assembling kit;
- said auxiliary elements (19) are all identical to one another and form a subgroup of components of the assembling kit, or only the auxiliary elements (19) intended to be fixed to a same longitudinal beam of said two or more longitudinal beams (1a, 1b) are identical to one another and form a subgroup of components of the assembling kit;
- the connecting elements (7) that connect said two or more cross beams (5) to a same longitudinal beam of said two or more longitudinal beams (1a, 1b) are identical to one another and form a subgroup of components of the assembling kit.

6. Assembling kit (100) according to claim 4 or 5, wherein each of said connecting elements (7) comprises:
- at least one first connecting portion (7a), intended to cooperate with a longitudinal beam of said two or more longitudinal beams (1a, 1b) and with one of said auxiliary elements (19) to connect said connecting element (7) to said longitudinal beam and said auxiliary element (19);
- at least one second connecting portion (7b), intended to cooperate with one of said two or more cross beams (5) to connect said connecting element (7) to said cross beam (5).

7. Assembling kit (100) according to claim 6, wherein at least one of said first connecting portion (7a) and said second connecting portion (7b) of each connecting element (7) has a hole group (8a, 8b) the geometric configuration of which finds identical match exclusively in a second hole group (2a, 2b) provided on one of said two or more longitudinal beams (1a, 1b) or on any of said two or more cross beams (5), respectively.

8. Assembling kit (100) according to any of claims 4 - 7, wherein said assembling kit (100) comprises two or more first supports (11), each of which comprises:
- at least one first fixing portion (11a), intended to cooperate with the first end (1a', 1b') of one longitudinal beam of said two or more longitudinal beams (1a, 1b) to fix said first support (11) to said longitudinal beam;
- at least one second fixing portion (11b), intended to cooperate with said first head profile (9a) to fix said first head profile (9a) to said first support (11);
- at least one third fixing portion (11c), intended to cooperate with one of said auxiliary elements (19) to fix said auxiliary element (19) to said first support (11).

9. Assembling kit (100) according to claim 8, wherein at least one of said first, second and third fixing portions (11a, 11b, 11c) of each of said two or more first supports (11) comprises at least one hole group (12a, 12b) that finds identical match exclusively in a second hole group (4a, 10a) provided on one of said one or more longitudinal beams (1a, 1b), on said first head profile (9a) or on said auxiliary elements (19), respectively.

10. Assembling kit (100) according to claim 8 or 9, wherein each of said first supports (11) comprises a supplementary fixing portion (11d) intended to fix one of said two or more longitudinal beams (1a, 1b) to the chassis of the vehicle.

11. Assembling kit (100) according to any of claims 4 - 10, wherein said assembling kit (100) comprises two or more second supports (13), each of which comprises:
- at least one fourth fixing portion (13a), intended to cooperate with the second end (1a", 1b") of one longitudinal beam of said two or more longitudinal beams (1a, 1b) to fix said second support (13) to said longitudinal beam;
- at least one fifth fixing portion (13b), intended to cooperate with the second head profile (9b) to fix said second head profile (9b) to said second support (13);
- at least one sixth fixing portion (13c), intended to cooperate with one of said auxiliary elements (19) to fix said auxiliary element (19) to said second support (13).

12. Assembling kit (100) according to claim 11, wherein at least one of said fourth, fifth and sixth fixing portions (13a, 13b, 13c) comprises a hole group (14a, 14b) that finds identical match exclusively in the geometric configuration of a second hole group (6a, 10b) provided on one of said one or more longitudinal beams (1a, 1b), on said second head profile (9b) or on said auxiliary elements (19), respectively.

13. Assembling kit (100) according to any of claims 4 - 12, wherein said assembling kit (100) comprises:
- two lateral profiles (15a, 15b) intended to be positioned perpendicularly to the first and second head profiles (9a, 9b) and to be fixed to said first and second head profiles (9a, 9b) in order to form together therewith a perimeter frame;
- four corner blocks (17a, 17b), wherein each of said corner blocks is intended to fix one end of each of said first and second head profiles (9a, 9b) to one end of each of the two lateral profiles (15a, 15b).

14. Method of assembling a load body (200) to the chassis of a vehicle, the method comprising the steps of:
a) providing one or more subgroups of components, each subgroup of components being formed by two or more identical components;
b) providing one or more unique components, different from one another and different from all the components that form said one or more subgroups of components;
wherein:
- said one or more unique components and said components that form said one or more subgroups of components comprise one or more hole groups (2a, 2b, 4a, 8a, 8b, 10a, 12a, 12b), each of said hole groups being arranged according to a predetermined geometric configuration resulting from the geometric arrangement of the holes that form said hole group and/or by the position of said hole group in relation to the component itself;
- the geometric configuration of at least one first hole group provided on any component belonging to a same subgroup of components finds identical match not only in the components belonging to the same subgroup of components but also in the geometric configuration of a second hole group provided exclusively in another subgroup of components, on any component belonging to said other subgroup of components, or in the geometric configuration of a second hole group provided exclusively on a unique component;
- the geometric configuration of at least one first hole group provided on any unique component, when finding no identical match in a hole group provided in a subgroup of components, finds identical match in the geometric configuration of a second hole group provided exclusively on another unique component of the assembling kit;
c) identifying the first hole group and the second hole group the geometric configurations of which find identical match;
d) placing said first hole group and said second hole group against each other in such a way that the holes of said first hole group are aligned with the holes of said second hole group;
e) inserting joining elements into each pair of aligned holes of the first hole group and the second hole group.
